# EUROPÄISCHE PATENTSCHRIFT

(11) **EP 3 101 352 B1**
(45) Veröffentlichungstag und Bekanntmachung des Hinweises auf die Patenterteilung: **28.06.2017**
(21) Anmeldenummer: 16172083.4
(22) Anmeldetag: 31.05.2016
(51) Int. Cl.: F24D 19/10

(54) **VERFAHREN ZUM BETREIBEN EINER HEIZUNGSANLAGE UND REGLER MIT DIFFERENZDRUCKSENSOR**
METHOD FOR OPERATING A HEATING INSTALLATION AND CONTROLLER WITH DIFFERENTIAL PRESSURE SENSOR
PROCEDE DE FONCTIONNEMENT D'UNE INSTALLATION DE CHAUFFAGE ET DISPOSITIF DE REGULATION COMPRENANT UN CAPTEUR DE DIFFERENCE DE PRESSION

(30) Priorität: 01.06.2015 DE 102015006779
(43) Veröffentlichungstag der Anmeldung: 07.12.2016
(73) Patentinhaber: PAW GmbH & Co. KG, 31789 Hameln (DE)
(72) Erfinder: Pommerening, Marc, 31789 Hameln (DE); Vehmeier, Jörg, 32791 Lage (DE); Böhning, Holger, 31860 Emmertal (DE); Pradler, Sascha, 31787 Hameln (DE); Möller, Lars, 33689 Bielefeld (DE); Pärisch, Peter, 31785 Hameln (DE)
(74) Vertreter: Siekmann, Gunnar

(56) Entgegenhaltungen:
- EP-A1- 1 923 639
- DE-A1- 10 139 510
- DE-A1- 19 842 174
- DE-A1-102008 004 126

## Beschreibung

Die Erfindung betrifft ein Verfahren zum Betreiben einer Heizungsanlage, bei dem zumindest über eine zentrale Zuführungs- und Abführungsleitung Heizmedium zu Heizkreisläufen geführt beziehungsweise abgeführt wird. Weiterhin betrifft die Erfindung auch einen Regler mit Differenzdrucksensor.

In der Heizungstechnik größerer Gebäude ist es Stand der Technik mehrere Heizkreisläufe an eine zentrale Zuführungs- und Abführungsleitung, zum Beispiel an einen Verteilerbalken, anzuschließen. Dies entspricht einer Parallelschaltung der Heizkreisläufe. Die meisten der Heizkreisläufe verfügen über eine eigene Pumpe und einen eigenen Mischer, mit dem eine witterungsgeführte Rücklaufbeimischung für jeden Heizkreis realisiert wird.

Ein hydraulischer Abgleich der Heizkreisläufe auf dem Verteilerbalken gewährleistet, dass jeder Heizkreislauf mit der Wärmeleistung versorgt wird, die er benötigt (sofern die Vorlauftemperatur in den Verteiler ausreichend ist). Hier kennt der Stand der Technik zwei Möglichkeiten.
Erstens sind es Drosselorgane wie Differenzdruckregler, die in jedem Heizkreislauf einzusetzen sind. An ihnen wird üblicherweise über eine Federkraft, die auf eine Membran wirkt, ein Soll-Differenzdruck eingestellt. Die zwei Seiten der Membran sind mit druckübertragenden Rohren mit Vor- und Rücklauf verbunden. Die Membran verändert abhängig von Soll-/Ist-Differenz den Ventilsitz, also den Strömungsquerschnitt, so dass sich zwischen Vorlauf und Rücklauf ein konstanter Differenzdruck einstellt. Dieser passt sich dann dynamisch an den Wärmebedarf/Volumenstrom an. Differenzdruckregler haben den Nachteil, dass dem Wasser beim Pumpen zugeführte Strömungsenergie ungenutzt verwirbelt wird. Zudem erzeugen Differenzdruckregler einen zusätzlichen Druckverlust, um ihre Ventilautorität auszuüben. An den Pumpen muss eine sehr hohe Regelkennlinie (zum Beispiel Proportionaldruckkennlinie H-v) eingestellt werden, um den zusätzlichen Druckverlust auszugleichen. Das erhöht den Stromverbrauch signifikant. Außerdem sind Differenzdruckregler in der Anschaffung teuer.

Zweitens sind es selbstregelnde Pumpen, die außer einer Konstantdrehzahlkennlinie (n-c) meist eine Proportionaldruckkennlinie (H-v) oder eine Konstantdruckkennlinie (H-c) implementiert haben (H weil der erzeugte Druck in der Praxis Förderhöhe genannt wird). Bei der Konstantdruckkennlinie wird zu jeder Stellung der Heizkörperventile, also für jede Anlagenkennlinie, die Pumpendrehzahl n so eingestellt, dass sich die gleiche Förderhöhe H bezogen auf die Anschlussstutzen der Pumpe ergibt. Bei der Proportionaldruckkennlinie steigt die Soll-Förderhöhe H(Q) proportional zum Volumenstrom Q an bzw. fällt nach links ab. Dem liegt die Erkenntnis zugrunde, dass ein abnehmender Volumenstrom mit einer Abnahme des Wärmebedarfs einhergeht und die Druckverluste in der Verteilleitung zurückgehen.

Gebräuchlich ist ein linearer Zusammenhang, es sind jedoch auch andere funktionale Zusammenhänge zwischen Volumenstrom Q und Soll-Förderhöhe H vorgeschlagen worden (zum Beispiel eine Wurzelfunktion in EP 0 726 396 B1 oder gar eine Durchfluss konstant Regelung DE 2946 049 A1). Eine Veränderung der Anlagenkennlinie wird immer anhand einer Veränderung des Volumenstroms (im Folgenden auch Durchfluss genannt) detektiert, die entweder direkt mit einem Durchflusssensor gemessen oder rechnerisch aus den elektrischen Betriebsgrößen des Motors unter Zuhilfenahme eines implementierten Pumpenkennfelds berechnet wird (EP 0 150 068 A3 oder DE 2946 049 A1). Die selbstregelnden Pumpen haben gegenüber den Differenzdruckreglern den Vorteil, dass nur so viel elektrische Energie aufgewendet wird, wie zum Betrieb des Heizkreislaufs notwendig ist.

Die selbstregelnden Pumpen am Verteilerbalken eingesetzt haben den großen Nachteil, dass sie nicht unterscheiden können, ob eine Volumenstromreduktion durch die Thermostatventile im eigenen Heizkreislauf oder in einem anderen Heizkreislauf verursacht wird. Es sind jedoch gegenteilige Reaktionen erforderlich. Erhöhen andere Heizkreisläufe ihren Volumenstrom, reduziert die Pumpe ihre Drehzahl, weil der Druckverlust im Kesselkreislauf zugenommen hat. Der Wärmebedarf im eigenen Heizkreislauf ist eigentlich konstant geblieben und eine Drehzahlerhöhung wäre erforderlich gewesen, um den Volumenstrom konstant zu halten.

In EP 2 775 370 A2 wird eine Vorrichtung beschrieben, die zum Ziel hat, den hydraulischen Abgleich beziehungsweise eine bessere Verteilung der Heizleistung zu ermöglichen. Sie besteht aus mehreren parallel geschalteten Fluidkreisläufen, insbesondere Heizkreisläufen an einem Verteilerbalken mit oder ohne witterungeführte Rücklaufbeimischung, mit jeweils einer drehzahlvariablen Pumpe, jeweils einem Durchflusssensor, jeweils einem Vorund Rücklauftemperatursensor, mit einem gemeinsamen Vorlauftemperatursensor des Verteilers und mindestens einem Regler. Dieses Konzept funktioniert jedoch nur, wenn ein Informationsaustausch der Heizkreise untereinander erfolgt, weil die eigentliche Regelgröße nicht gemessen wird. Höhere Anschaffungskosten sind die Folge. Durch den modellbasierten Ansatz ist die Software schwieriger auf andere Dimensionen oder Produkte übertragbar.

Ein weiterer Lösungsansatz ist es, den Verteiler differenzdruckarm zu gestalten, indem ein hydraulischer Kurzschluss zwischen Vorlauf und Rücklauf, zum Beispiel mit einer hydraulischen Weiche, realisiert wird. Dadurch wird die gegenseitige Beeinflussung reduziert und die Pumpen können bei niedriger Drehzahl betrieben werden. Nachteilig ist jedoch, dass eine weitere Pumpe im Kesselkreislauf notwendig wird, die die Wärme zur hydraulischen Weiche transportiert. Fällt diese Pumpe aus, liegt die gesamte Wärmeversorgung darnieder. Der große Nachteil besteht aber darin, dass die Volumenströme des Kesselkreislaufs und der Heizkreisläufe nicht abgeglichen sind und somit häufig die hohe Vorlauftemperatur dem Rücklauf beigemischt wird. Die höhere Rücklauftemperatur reduziert die Effizienz des Wärmeerzeugers und kostet Brennstoff. In EP 1 923 639 A1 ist ein Verfahren gemäß dem Oberbegriff des Anspruchs 1 offenbart. Es ist Aufgabe der vorliegenden Erfindung einen hydraulischen Abgleich zwischen den Wärmeverbrauchern (Heizkreisen) auf dem Verteilerbalken zu realisieren und dabei die schädlichen Auswirkungen des Standes der Technik zu vermeiden. Insbesondere soll ein strom- und brennstoffsparender Betrieb der Heizungsumwälzpumpen ermöglicht werden. Gleichzeitig soll das Verfahren ohne großen Aufwand bei Bestandsanlagen nachrüstbar sein und auf andere Anlagendimensionen anwendbar sein.

Diese Aufgabe ist verfahrensseitig erfindungsgemäß durch die kennzeichnenden Merkmale des Anspruchs 1 gelöst. Bei dem erfindungsgemäßen Verfahren wird der Differenzdruck zwischen Vorlauf- und Rücklaufleitung des Heizkreislaufs gemessen. Dazu wird kein Abschnitt der Vorlaufleitung bzw. der Rücklaufleitung reduziert, so dass keine zusätzlichen Druckverluste auftreten.

Änderungen des Wärmebedarfs im eigenen Heizkreislauf sowie Wechselwirkungen mit anderen Heizkreisläufen werden anhand einer Änderung des Differenzdrucks detektiert und können mit Hilfe der in den Heizkreislauf eingesetzten Pumpe ausgeglichen werden. Das Ausgleichen erfolgt schnell und simultan in jedem Heizkreislauf, indem über ein Regelsignal (zum Beispiel PWM) die Drehzahl der Pumpe erhöht beziehungsweise erniedrigt wird, wenn der Differenzdruck unter den Sollwert fällt beziehungsweise über den Sollwert steigt. Der Modulationsbereich der Pumpe, also der verwendete Drehzahlbereich, erhöht sich gegenüber dem Stand der Technik deutlich, so dass die eingesetzte Pumpe über weite Teile des Jahres in einem Arbeitsbereich gefahren werden kann, der weit unterhalb ihrer typischen Kennlinie liegt. Die Pumpe kann mit geringen Drehzahlen betrieben werden, so dass ein schonender und zugleich energiesparender Betrieb der Pumpe eintritt. Als Regelungsansatz können Algorithmen wie P-Regler, PI-Regler und PID-Regler eingesetzt werden.

Nach einer ersten Weiterbildung der Erfindung ist vorgesehen, dass voneinander verschiedene Sollwerte vorzugsweise für voneinander verschiedene Heizungstypen vorgehalten werden. Verschiedene Heiztypen können beispielsweise Flächenheizungen, Radiatorheizungen oder Speichernachheizungen sein. Für die jeweiligen Heizungstypen sind im Regler Standard-Sollwerte hinterlegt, zum Beispiel 100 mbar für Radiatorheizungen, die beim Auswählen des Heizungstyps geladen werden. Es ist sinnvoll, dass die Standard-Sollwerte vom Handwerker an die örtlichen Gegebenheiten angepasst werden können. Erfindungsgemäß wird neben dem Messen des Differenzdrucks zusätzlich der volumenstrom im Heizkreislauf erfasst und der Sollwert abhängig vom Volumenstrom angepasst. Je größer der Volumenstrom ist, desto größer ist der Druckverlust in der Rohrleitung zu den Heizkörpern. Das heißt, um den Differenzdruck über dem Heizkörper konstant zu halten ist es sinnvoll, den Sollwert mit steigendem Volumenstrom zu vergrößern. Hierfür bietet sich aufgrund der Natur der Rohrleitungsdruckverlust vor allem ein linearer oder quadratischer Zusammenhang zwischen Volumenstrom und Differenzdruck an. Die Funktion insbesondere die Steigung kann an die örtlichen Gegebenheiten angepasst werden.

In einer vorteilhaften Weiterbildung der Erfindung ist vorgesehen, dass jedem Heizkreislauf ein Grenzwert für den Volumenstrom zugewiesen werden kann, bei dessen Erreichen die Drehzahl der Pumpe derart reduziert wird, dass der Grenzwert nicht überschritten wird. Durch das Abregeln wird vermieden, dass ein Heizkreislauf aufgrund eines falschen Sollwertes zu viel Volumenstrom saugt und bei anderen eine Unterversorgung auftritt. Der Volumenstrom kann dabei von der Pumpe errechnet werden und an die Regelung übermittelt werden oder mit Hilfe eines an die Regelung angeschlossenen Durchflusssensors erfasst werden.

Schließlich ist es möglich, eine fortlaufende statistische Analyse der Parameter, Differenzdruck, gegebenenfalls Volumenstrom, Vorlauftemperatur und/oder der Pumpendrehzahl durchzuführen und die Höhe des Soll-Differenzdrucks daran anzupassen. Die automatische Adaption nimmt den Handwerker die Feinjustierung des Soll-Differenzdrucks ab und optimiert den Betriebspunkt der Pumpe.

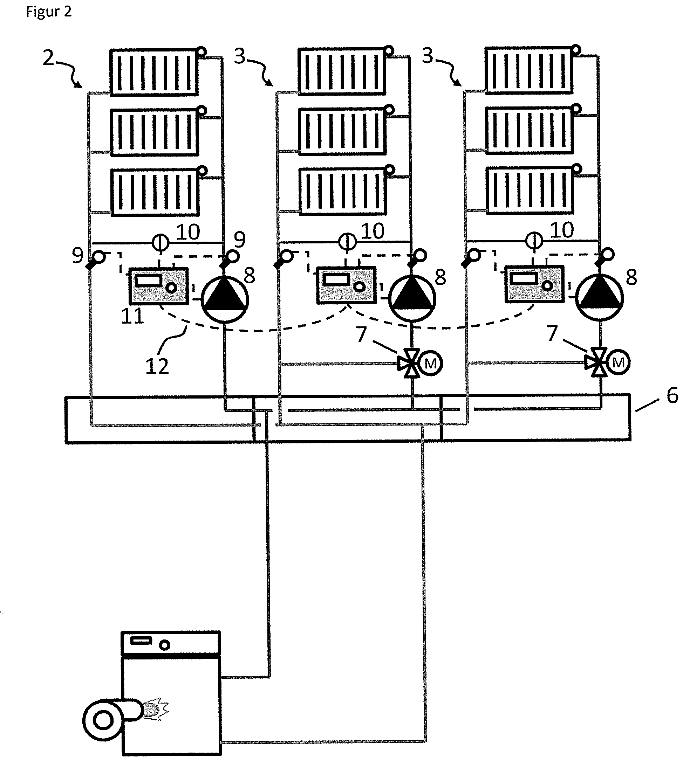

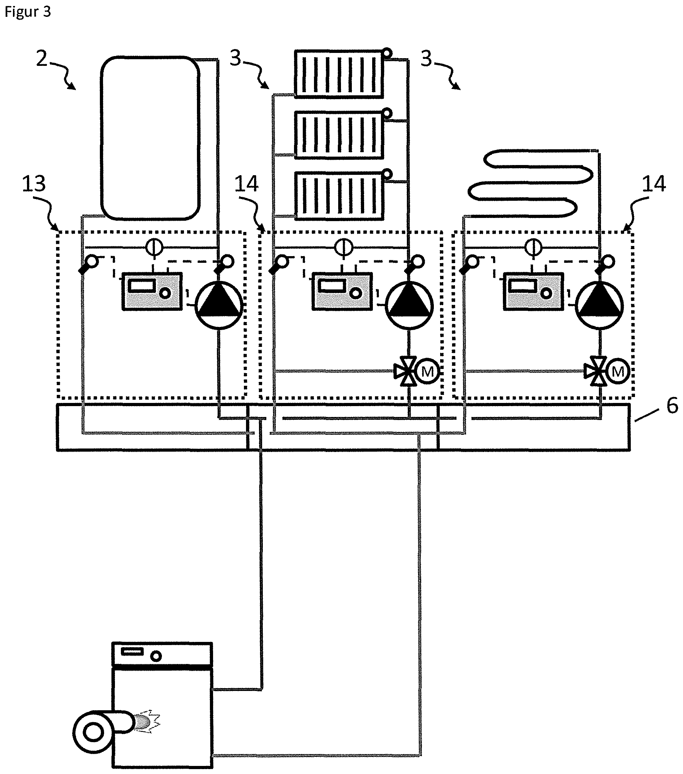

Weiterhin kann noch der Regler über Busleitungen mit anderen Pumpendrehzahlreglern verbunden werden und eine statistische Analyse der Betriebsparameter über alle Heizkreisläufe gemeinsam durchgeführt werden. Denkbar ist auch ein einziger Regler, der mit den Pumpen und Sensoren aller Heizkreise verbunden ist. Ausführungsbeispiele der Erfindung sind in den Figuren 2 und 3 dargestellt. Es zeigen:
- Figur 1:: eine Heizungsanlage nach dem Stand der Technik mit einer zentralen Zuführungs- und Abführungsleitung, einer hydraulischen Weiche und drei Heizkreisen;
- Figur 2:: eine erste Ausführung einer Heizungsanlage, die nach dem erfindungsgemäßen Verfahren betrieben wird; und
- Figur 3:: eine zweite Ausführung einer Heizungsanlage, gleichfalls betrieben nach dem erfindungsgemäßen Verfahren.

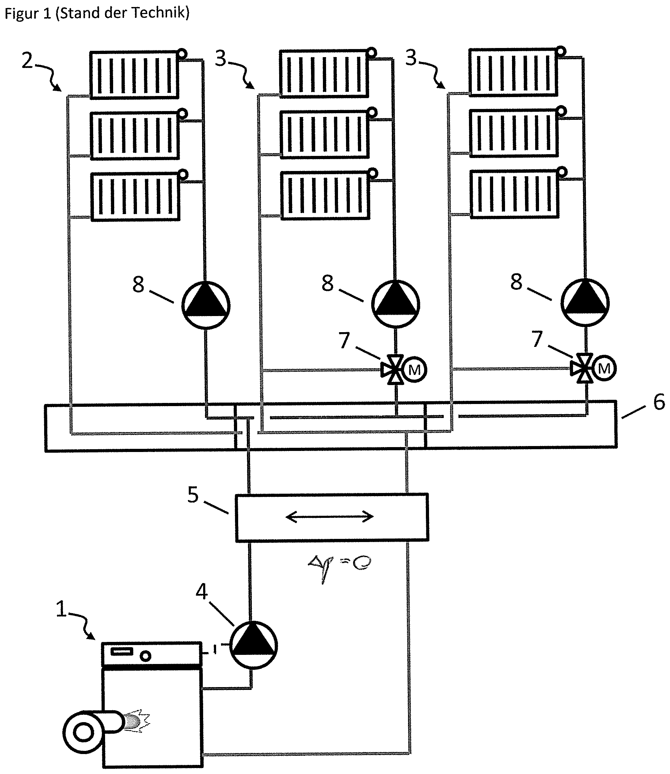

Figur 1 zeigt ein bekanntes Heizsystem mit einem Heizkessel 1 sowie einen Heizkreisverteiler 6 mit einem ungemischten Heizkreis 2 sowie zwei witterungsgeführten Heizkreisen 3 mit Mischer 7. Gemäß dem Stand der Technik sind die Heizkreise mit selbstregelnden Pumpen 8 und einer hydraulischen Weiche 5 unterhalb des Verteilers ausgestattet. Die hydraulische Weiche 5 bezweckt, dass der Verteiler 6 differenzdruckarm wird, und die Heizkreise 2, 3 sich weniger stark gegenseitig beeinflussen. Dadurch können unterschiedliche Volumenströme im Kesselkreis sowie im Heizkreis eingestellt werden. Die Heizkreispumpen sind einfach einzustellen und stromsparend im Betrieb. Nachteilig ist jedoch, dass eine weitere Pumpe, die Kesselpumpe 4, erforderlich ist. Fällt sie aus, fällt die komplette Wärmeversorgung des Gebäudes aus. Der fehlende Abgleich der Volumenströme ober- und unterhalb der hydraulischen Weiche sorgt dafür, dass dem Rücklauf in der Regel heißes Wasser aus dem Vorlauf zugemischt wird. Dies erhöht den Brennstoffverbrauch des Wärmeerzeugers, wie zum Beispiel Wärmepumpe oder Brennwertkessel, dessen Effizienz maßgeblich von der Rücklauftemperatur beeinflusst wird.

Figur 2 zeigt das erfindungsgemäße System mit einem Heizkessel 1 sowie einem Heizkreisverteiler 6 mit einem ungemischten Heizkreis 2 sowie zwei witterungsgeführten Heizkreisen 3 mit Mischer. Beim erfindungsgemäßen Verfahren regeln sich die Pumpen nicht selbst, sondern werden von einem Regler 11 in ihrer Drehzahl beeinflusst. Am Regler angeschlossen sind die Differenzdrucksensoren 10, und die drehzahlregelbaren Pumpen 8. Am Regler ist außerdem das Volumenstromsignal der Pumpe angeschlossen. Vorteilhaft, aber nicht zwingend, sind am Regler zwei Temperatursensoren angeschlossen. Vorteilhaft, aber nicht zwingend, sind die Regler 11 untereinander über eine Busverbindung 12 miteinander verbunden. Das erfindungsgemäße Verfahren ermöglicht durch passende Ansteuerung der Pumpen nur so viel Energie beziehungsweise Druck aufzuwenden, wie für die Versorgung benötigt wird. Dadurch wird sowohl ein stromsparender Betrieb der Pumpen ermöglicht und eine niedrige Rücklauftemperatur durch Weglassen der hydraulischen Weiche erzielt. Weiterhin besteht bei einem Ausfall einer Pumpe weiterhin eine Wärmeversorgung von Gebäudeteilen.

Figur 3 zeigt ein Heizsystem mit einem Heizkessel 1 sowie einen Heizkreisverteiler 6 mit einem Heizkreiskompaktmodul ohne Mischer 13 für die Speicherbeladung sowie zwei Heizkreiskompaktmodule mit motorisch veränderbarem Mischer 14 für einen Radiatorkreis und einen Fußbodenkreis. Die industriell vorgefertigten Baugruppen bringen dem Installateur eine große Zeitersparnis beim Einbau, aber auch bei der Bestellung. Abhängig von der Anwendung, die im Regler ausgewählt werden kann, werden verschiedene hinterlegte Sollwerte für den Differenzdruck im Regler ausgewählt. Das erleichtert dem Installateur die Inbetriebnahme. Für einen Fußbodenheizkreis wird zum Beispiel 150 mbar hinterlegt, während für einen Radiatorheizkreis 100 mbar hinterlegt sind.

## Patentansprüche

1. Verfahren zum Betreiben einer Heizungsanlage, bei dem zumindest über eine zentrale Zuführungs- und Abführungsleitung Heizmedium zu Heizkreisläufen geführt bzw. abgeführt wird, und bei dem in jedem Heizkreislauf (2, 3) der Differenzdruck zwischen Vorlauf- und Rücklaufleitung des Heizkreislaufs (2, 3) gemessen wird, der gemessene Druckmesswert mit einem hinterlegten Sollwert verglichen wird und mit einer Drehzahländerung einer in den Heizkreislauf (2, 3) eingesetzten Pumpe (8) der Differenzdruck im Heizkreislauf (2, 3) an den Sollwert angepasst wird,
**dadurch gekennzeichnet,**
**dass** zusätzlich der Volumenstrom im Heizkreislauf (2, 3) erfasst wird und in Abhängigkeit dessen der Differenzdruck-Sollwert gemäß einem funktionalen Zusammenhang, insbesondere gemäß einem linearen Zusammenhang mit positiver Steigung, angepasst wird.

2. Verfahren nach Anspruch 1, **dadurch gekennzeichnet, dass** voneinander verschiedene Sollwerte vorzugsweise für voneinander verschiedene Heizungstypen vorgehalten werden.

3. Verfahren nach Anspruch 1 oder 2, **dadurch gekennzeichnet, dass** bei Erreichen eines einstellbaren Grenzwertes des Volumenstroms die Drehzahl der Pumpe (8) vermindert wird.

4. Verfahren nach einem der vorhergehenden Ansprüche, **dadurch gekennzeichnet, dass** der Volumenstrom mit Hilfe der Pumpe (8) errechnet wird und an eine Regelung (11) übermittelt wird.

5. Verfahren nach einem der vorhergehenden Ansprüche, **dadurch gekennzeichnet, dass** eine fortlaufende statistische Analyse der Parameter Differenzdruck, Volumenstrom, Vorlauftemperatur und/oder Drehzahl der Pumpe (8) durchgeführt wird und die Höhe des Soll-Differenzdrucks daran angepasst wird.

6. Verfahren nach einem der Ansprüche 1 bis 4, **dadurch gekennzeichnet, dass** der Regler (11) über Busleitungen (12) mit anderen Pumpendrehzahlreglern (11) verbunden wird und eine statistische Analyse der Betriebsparameter über alle Heizkreisläufe (2, 3) gemeinsam ermittelt wird und die Höhe der Soll-Differenzdrücke daran angepasst wird.

7. Regler für mindestens eine Heizkreisumwälzpumpe jeweils mit Differenzdrucksensor, Vorlauf- und Rücklauftemperatursensoren, drehzahlvariabler Pumpe und Volumenstromerfassung, **dadurch gekennzeichnet, dass** im Regler ein Algorithmus zur Umsetzung des Verfahrens nach einem der Ansprüche 1 bis 6 implementiert ist.

## Claims

1. A method for operating a heating system, in which heating medium is guided and discharged to heating circuits at least via a central supply and discharge line, and in which the differential pressure between feed and return line of the heating circuit (2, 3) is measured in each heating circuit (2, 3), the measured pressure value is compared with a stored set-point value and the differential pressure in the heating circuit (2, 3) is adjusted to the set-point value using a speed change of a pump (8) used in the heating circuit (2, 3),
**characterized**
**in that** the volumetric flow in the heating circuit (2, 3) is additionally detected and the differential-pressure set-point value is adapted as a function of the volumetric flow in accordance with a functional relationship, particularly in accordance with a linear relationship with positive gradient.

2. The method according to Claim 1, **characterized in that** mutually differing set-point values are preferably kept for heating types which differ from one another.

3. The method according to Claim 1 or 2, **characterized in that** the speed of the pump (8) is reduced if a settable limit value of the volumetric flow is reached.

4. The method according to one of the preceding claims, **characterized in that** the volumetric flow is calculated with the aid of the pump (8) and transmitted to a control (11).

5. The method according to one of the preceding claims, **characterized in that** a continuous statistical analysis of the parameters differential pressure, volumetric flow, feed temperature and/or speed of the pump (8) is carried out and the level of the set-point differential pressure is adapted thereto.

6. The method according to one of Claims 1 to 4, **characterized in that** the controller (11) is connected to other pump speed controllers (11) via bus lines (12) and a statistical analysis of the operating parameters across all heating circuits (2, 3) is determined jointly and the level of the set-point differential pressures is adapted thereto.

7. A controller for at least one heating-circuit circulation pump in each case having a differential pressure sensor, feed and return temperature sensors, variable-speed pump and volumetric flow detection, **characterized in that** an algorithm for implementing the method according to one of Claims 1 to 6 is implemented in the controller.

## Revendications

1. Procédé pour faire fonctionner une installation de chauffage, dans lequel, au moins via une conduite centrale d'amenée et d'évacuation, un milieu de chauffage est amené vers des circuits de chauffage ou est évacué de ceux-ci, et dans lequel, dans chaque circuit de chauffage (2, 3), on mesure la différence de pression entre la conduite aller et retour du circuit de chauffage (2, 3), la valeur de mesure de pression mesurée étant comparée avec une valeur de consigne enregistrée et, avec une modification de vitesse de rotation d'une pompe (8) mise en place dans le circuit de chauffage (2, 3), la différence de pression dans le circuit de chauffage (2, 3) étant adaptée à la valeur de consigne,
**caractérisé en ce que**
l'on détecte additionnellement le débit volumique dans le circuit de chauffage (2, 3) et adapte en fonction de celui-ci la valeur de consigne de différence de pression conformément à un rapport fonctionnel, en particulier conformément à un rapport linéaire avec une pente positive.

2. Procédé selon la revendication 1, **caractérisé en ce que** des valeurs de consigne différentes les unes des autres sont de préférence mises à disposition pour des types de chauffage différents les uns des autres.

3. Procédé selon la revendication 1 ou 2, **caractérisé en ce qu'**en cas d'atteinte d'une valeur de seuil réglable du débit volumique, la vitesse de rotation de la pompe (8) est réduite.

4. Procédé selon l'une des revendications précédentes, **caractérisé en ce que** le débit volumique est calculé à l'aide de la pompe (8) et est transmis à une régulation (11).

5. Procédé selon l'une des revendications précédentes, **caractérisé en ce qu'**une analyse statistique continue des paramètres de différence de pression, débit volumique, température de départ et/ou vitesse de rotation de la pompe (8) est effectuée et **en ce que** la hauteur de la différence de pression de consigne y est adaptée.

6. Procédé selon l'une des revendications 1 à 4, **caractérisé en ce que** le dispositif de régulation (11) est relié via des lignes de bus (12) à d'autres dispositifs de régulation de vitesse de rotation de pompe (11) et **en ce qu'**une analyse statistique des paramètres de fonctionnement est effectuée en commun via tous les circuits de chauffage (2, 3) et **en ce que** la hauteur des différences de pression de consigne y est adaptée.

7. Dispositif de régulation pour au moins une pompe de circulation de circuit de chauffage avec respectivement un capteur de différence de pression, des capteurs de température aller et retour, une pompe à variation de vitesse de rotation et une détection du débit volumique, **caractérisé en ce qu'**un algorithme est implémenté dans le dispositif de régulation pour la mise en oeuvre du procédé selon l'une des revendications 1 à 6.
